# EUROPÄISCHE PATENTSCHRIFT

(11) **EP 3 616 186 B1**
(45) Veröffentlichungstag und Bekanntmachung des Hinweises auf die Patenterteilung: **29.01.2025**
(21) Anmeldenummer: 18721747.6
(22) Anmeldetag: 27.04.2018
(51) Int. Cl.: C09J 7/30, G09F 3/02, G09F 3/10

(54) **AKTIVIERBARES KLEBEETIKETT**
ACTIVATABLE ADHESIVE LABEL
ÉTIQUETTE ADHÉSIVE ACTIVABLE

(30) Priorität: 27.04.2017 DE 102017109074
(43) Veröffentlichungstag der Anmeldung: 04.03.2020
(73) Patentinhaber: Herma GmbH, 70794 Filderstadt (DE)
(72) Erfinder: GABLOWSKI, Marcus, 72116 Moessingen (DE); NAEGELE, Ulli, 72072 Tuebingen (DE)
(74) Vertreter: DREISS Patentanwälte PartG mbB
(86) Internationale Anmeldenummer: PCT/EP2018/060942
(87) Internationale Veröffentlichungsnummer: WO 2018/197697

(56) Entgegenhaltungen:
- WO-A1-2015/029049
- WO-A1-2015/029049
- WO-A1-2016/109199
- WO-A1-2016/109199
- US-A1- 2014 231 006
- US-A1- 2014 231 006

## Beschreibung

Die vorliegende Erfindung betrifft ein aktivierbares Klebeetikett umfassend ein bahnförmiges Sichtmaterial, wobei auf einer Seite des flexiblen Sichtmaterials mindestens eine Haftschicht aus einem feuchteaktivierbaren, im trockenen Zustand nicht klebrigen Klebstoff aufgebracht ist.

Derartige klebende Laminate (Klebeetiketten) werden beispielsweise als Etiketten, aber auch als Klebebänder, insbesondere für Logistikanwendungen, aber auch für übliche Etikettenanwendungen zum Schmücken, Kennzeichnen und Verschließen eingesetzt.

Etiketten bestehen in der Regel aus einem Sichtmaterial, das mit einer Bedruckung versehen ist, sowie einer klebenden Schicht (Haftschicht).

Viele dieser Etiketten weisen darüber hinaus eine ablösbare Schicht (z.B. silikonisierten Liner) auf, welche die klebende Schicht auf der dem Sichtmaterial abgewandten Seite überdeckt. Diese zusätzliche Schicht dient dazu, ein Verkleben der Etiketten beispielsweise, sofern diese in Rollenform vorliegen, mit der nächstliegenden Schicht des Sichtmaterials zu verhindern. Nachteilig ist hierbei, dass durch die zusätzliche Schicht eine weitere Materialschicht notwendig ist und darüber hinaus diese Schicht nach dem Abziehen von der Haftschicht entsorgt werden muss. Insbesondere, wenn ein automatisiertes Etikettieren vorgesehen ist, stellt diese zusätzliche Schicht zusätzliche Probleme und Anforderungen an die Produktion.

Darüber hinaus existieren im Stand der Technik Etiketten, bei denen auf der der Haftschicht abgewandten Seite des Sichtmaterials eine Ablösebeschichtung vorgesehen ist, die verhindert, dass sich die Haftschicht auf dem Sichtmaterial klebend verankert. Hierdurch werden die Kosten erhöht und darüber hinaus sind derartige Materialien nicht beliebig bedruckbar.

Ferner sind diese Systeme, bei denen eine Ablösebeschichtung auf der der Haftschicht gegenüberliegenden Seite des Sichtmaterials vorgesehen ist, aufgrund der permanenten Klebrigkeit der Haftschicht schwieriger zu verarbeiten.

Es bestand daher seit längerem bereits ein Wunsch nach aktivierbaren Klebeetiketten für Etikettieranwendungen oder als Klebebänder, die als sogenannte "Linerless-Systeme" arbeiten, d.h. keine Ablöseschicht auf der Haftschicht benötigen und auch keine Ablösebeschichtung auf der der Haftschicht gegenüberliegenden Seite des Sichtmaterials. Derartige Systeme sind beispielsweise von Briefmarken, etc. bekannt, und weisen als Haftschicht ein Klebemittel auf, das aktivierbar ist. Als Aktivierungsmittel kommen beispielsweise Feuchtigkeit, aber auch Strahlung oder Wärme, in Betracht.

So beschreibt beispielsweise die EP 2 924 088 A1 ein sogenanntes "linerfree-" oder "linerless"-Etikett sowie eine Klebstoffkomposition zum Einsatz hierfür, wobei zwei verschieden hydrophile Polymermaterialien in der Klebstoffkomposition vorhanden sind und die eine bei Aktivierung mit einem Fluid eine schnelle Ersthaftung bereitstellt, wenn sie mit dem Aktivierungsfluid in Kontakt kommt, und die zweite, mehr hydrophobe Polymerkomponente dann die endgültige Haftung bereitstellt.

Darüber hinaus sind Systeme bekannt, beispielsweise aus der WO 2016/109199 A1, bei der die Haftschicht durch eine Schutzschicht verdeckt ist und die Schutzschicht feucheaktiverbar ist und sich insbesondere auflöst und dadurch nach einer ersten Positioniermöglichkeit ein klebender Verbund zwischen einer darunter vorgesehenen Haftschicht und einem Substrat ermöglicht wird.

Die Einstellung von gewünschten Haftkräften, insbesondere eine schnelle Ersthaftung, aber auch eine dauerhafte Adhäsion, stellt daher nach wie vor ein Ziel dar.

Es ist daher Aufgabe der Erfindung, ein alternatives aktivierbares Klebeetikett bereitzustellen, das im trockenen Zustand nicht klebend ist, aber durch Fluideinwirkung in einen klebenden Zustand überführbar ist, bei dem eine gute Haftung zwischen Sichtmaterial und Haftschicht auch im feuchten Zustand gewährleistet ist und wobei eine schnelle Ersthaftung/Anfasshaftung ("tack") bereitgestellt werden kann.

Die Erfindung löst diese Aufgabe durch ein aktivierbares Klebeetikett mit den Merkmalen des Anspruchs 1, bei dem zwischen Sichtmaterial und Haftschicht mindestens eine Mittelschicht vorgesehen ist, die haftklebend ausgebildet ist. Diese Mittelschicht erfüllt zweierlei Funktionen. So dient sie zum einen dazu, die Anfasshaftung, also die erste Haftung zwischen einem Substrat und dem Klebeetikett, zu verbessern, wobei gleichzeitig auch die Endhaftung durch einen dissipativen Anteil verbessert wird. Darüber hinaus verringert die Mittelschicht die Gefahr der Trennung von Haftschicht und Sichtmaterial, insbesondere im aufgeklebten bzw. applizierten Zustand.

Bevorzugt ist dabei das Sichtmaterial unmittelbar zur Mittelschicht benachbart, ohne dass weitere nicht haftklebende Schichten dazwischen vorgesehen sind. Alternativ oder zusätzlich ist auch die Haftschicht zur Mittelschicht unmittelbar benachbart.

Besonders bevorzugt ist es dabei, wenn das Sichtmaterial aus einem Papiermaterial oder einem Folienmaterial besteht. Als Folienmaterial kommen insbesondere Polyethylen, Polypropylen oder PET-Folien in Betracht. Die Dicke der Folie kann vorzugsweise 5 bis 250 µm, vorzugsweise 10 bis 200 µm und weiter vorzugsweise 15 bis 180 µm betragen. Bei den Folien handelt es sich insbesondere um mit herkömmlichen Druckverfahren bedruckbare Folien. Als Sichtmaterial kommt weiterhin Papier in Frage, wobei im Falle einer Verwendung von Papier die Dicke der Sichtmaterialschicht bevorzugt 5 bis 250 µm, vorzugsweise 15 bis 200 µm und weiter vorzugsweise 40 bis 100 µm beträgt. Bei den Papieren handelt es sich insbesondere auch um mit herkömmlichen Verfahren bedruckbare Papiere.

Als Haftschicht kommen insbesondere Materialien in Frage, die einen Klebstoff (Klebstoffsystem) oder ein Adhäsiv enthalten, der durch Feuchte oder Wassereinwirkung, d.h. Wasser im flüssigen oder dampfförmigen Zustand, aktivierbar ist zu einem klebenden Zustand. D.h., die Haftschicht ist im trockenen Zustand nicht klebrig und ist durch Hinzufügen von Wasser oder Wasserdampf oder alternativ einem anderen Fluid in flüssigem oder dampfförmigem Zustand so aktivierbar, dass die Haftschicht in einen klebenden Zustand überführt wird. Nach Verdunstung des Fluids ist dann die Haftschicht wieder nicht klebend. Das Fluid kann gegebenenfalls temperiert sein, um eine schnellere Reaktionszeit zu erlangen und damit eine schneller Verarbeitbarkeit des aktivierbaren Klebeetiketts, also Anhaftung auf einem Substrat.

Die Dicke der Haftschicht kann dabei vorzugsweise 1 bis 50 µm, weiter vorzugsweise 3 bis 20 µm und weiter vorzugsweise 5 bis 15 µm betragen. Die nicht klebenden Eigenschaften im trockenen Zustand liegen dabei bevorzugt bei Raumtemperatur vor.

Der Klebstoff für die Haftschicht kann dabei bevorzugt aus der Gruppe der Polyvinylacetate, Ethylenvinylacetate, Glutin- und Stärkederivate (Dextrin), Polyvinylalkohole sowie Kombinationen hiervon ausgewählt werden.

Darüber hinaus kann die Haftschicht Zusatzstoffe, wie beispielsweise Kolloide, oder andere Additive, wie z.B. grenzflächenaktive Substanzen, sowie Vernetzungsmittel enthalten oder ähnliches.

Als Mittelschicht kann vorzugsweise eine Schicht Verwendung finden, die zwischen 1 und 30 µm, vorzugsweise zwischen 2 und 20 µm und weiter vorzugsweise zwischen 4 und 12 µm dick ausgebildet ist. Die Mittelschicht dient dabei auch dazu, die rheologischen Eigenschaften des aktivierbaren Klebeetiketts zu verbessern und eine bessere Verbindung der Haftschicht mit einem zu beklebenden Substrat bereitzustellen.

Gemäss der Erfindung ist es daher wesentlich, dass die Glasübergangstemperatur unterhalb der Anwendungstemperatur liegt, insbesondere im Bereich < 0° C, vorzugsweise < -5° C und weiter vorzugsweise < -10° C, wobei die Untergrenze bei -100° C, vorzugsweise bei -80° C und weiter vorzugsweise bei -65° C liegt, so dass sich ein bevorzugter Anwendungsbereich der Glasübergangstemperatur zwischen -10 und -65° C ergibt. Die Glasübergangstemperatur der Polymere der Haftklebstoffe der Mittelschicht kann mit den üblichen Methoden, wie Differentialthermoanalyse oder Differentialscanningkalometrie, z.B. nach ASTM 3418/82, sogenannte "Midpointtemperatur", bestimmt werden.

Die Glasübergangstemperatur gibt dabei einen Anhaltspunkt hinsichtlich der Eigenschaft der Anfasshaftung (Tack) sowie weiterhin für die potentielle Klebrigkeit und das Vorhandensein eines wirksamen dissipativen Anteils.

Die messbare Anfasshaftung beträgt dabei >1 N, wobei die Messung mit 15 g/m² Trockenauftrag auf Polyesterfolie mit einer Dicke von 30 µm nach FTM 9 (FINAT Technical Handbook 9th Edition) erfolgt ist.

Als Haftkleber der Mittelschicht kommen vorzugsweise bei Raumtemperatur haftklebende Systeme, wie radikalisch polymerisierte Polymere, Polyester oder Polyaddukte, in Betracht, besonders bevorzugt durch Emissionspolymerisation erhältliche Polymere. Übliche Polymerzusammensetzungen für Acrylatdispersionen sind beispielsweise aus der DE 2 459 160 A1, EP 0 625 557 B1 sowie EP 0 952 199 bekannt, deren Offenbarung insoweit zum Gegenstand der vorliegenden Erfindung gemacht wird.

Daneben können auch natürliche oder synthetische Kautschuksysteme zum Einsatz kommen. Ferner haftklebende Systeme, deren Eigenschaften durch photochemische Vernetzung, z.B. durch Bestrahlung mit Elektronenstrahlen oder UV-Licht, eingestellt werden kann. Hier ist insbesondere acRESIN^{®} der Firma BASF, Ludwigshafen, Deutschland, als bevorzugt zu nennen. Darüber hinaus können auch weitere Klebstoffe, insbesondere auch Pressure Sensitive Adhesives (PSA), eingesetzt werden.

Darüber hinaus können auch silikonbasierte oder polyurethanbasierte Haftklebstoffsysteme eingesetzt werden.

Die Mittelschicht kann dabei neben dem Haftklebstoffpolymer weitere Zusatzstoffe enthalten, wobei hier insbesondere klebrigmachende Harze (sogenannte Tackifier) und reaktive Komponenten, wie externe Vernetzer zu nennen sind. Besonders bevorzugt besteht die Mittelschicht jedoch ausschließlich aus einem oder mehreren Haftklebstoffpolymeren, wobei auch mehrere Haftklebstoffpolymere in Kombination eingesetzt werden können. Grundsätzlich ist es auch denkbar, die Mittelschicht mehrlagig auszugestalten. In diesem Fall sind bevorzugt sämtliche Lagen der Mittelschicht haftklebend ausgebildet. Darüber hinaus können auch die übrigen Lagen, wie insbesondere die Haftschicht, insbesondere aus Gründen der Funktionalität oder der Beschichtbarkeit und/oder auch das Sichtmaterial, mehrlagig ausgebildet sein. Bevorzugt ist der Aufbau dreischichtig mit Sichtmaterial, Mittelschicht und Haftschicht, wobei die einzelnen Schichten ein- oder mehrlagig sein können. Insbesondere sind keine weiteren Schichten zwischen dem Sichtmaterial und der Mittelschicht sowie der Mittelschicht und der Haftschicht vorgesehen.

Erfindungsgemäß ist weiterhin vorgesehen, dass das aktivierbare Klebeetikett rollenförmig als Linerless-Laminat konfektionierbar ist. Eine Verwendung kann dann als Art Klebeband oder als in kleineren Einheiten vorliegendes Etikett (Etikettenzuschnitt) erfolgen, wobei die Konfektionierung auf die gewünschte Größe erst unmittelbar vor Anbringung auf einem Substrat erfolgt. Neben einer solchen rollenförmigen Konfektionierung ist auch eine stapelförmige Konfektionierung möglich. Dabei erfolgt eine Ausstanzung oder ein Zuschnitt z.B. in der Endgröße der zu verwendenden Etiketten oder ein Schneiden des rollenförmigen Bahnmaterials, wobei das aktivierbare Klebeetikett dann ohne zusätzliche Zwischenschichten für die Weiterverarbeitung stapelförmig gelagert werden kann.

Vorzugsweise ist keine klebestoffabweisende Ausrüstung, z.B. durch Silikon, des Sichtmaterials vorgesehen oder notwendig. Hierdurch kann die Auswahl an möglichen Sichtmaterialien vergrößert und beispielsweise die Bedruckbarkeit verbessert werden.

Weiterhin besonders bevorzugt ist vorgesehen, dass die Haftschicht eingefärbt ist. Hierdurch wird erreicht, dass bei Aufbringen und Aktivierung ein Teil der Farbstoffe in ein zu beklebendes Substrat eindringt und dies verfärbt. Bei einem späteren Manipulationsversuch durch Ablösen des Klebeetiketts wird dann entweder das Substrat zerstört oder aber die Verfärbung des beklebten Substrats sichtbar, die erkennen lässt, dass bereits ein Etikett oder ein Klebeband gemäß der Erfindung an dieser Stelle aufgebracht war.

Das aktivierbare Klebeetikett ist durch ein
Beschichtungsverfahren erhältlich, bei dem die Mittelschicht und die Haftschicht als wässrige Dispersion, Lösung, Schmelze oder flüssiges 100%-System vorliegen und beschichtet werden. Die Beschichtung der Mittelschicht sowie der Haftschicht erfolgt vorzugsweise in einem Arbeitsgang.

Hierzu kann eine Mehrfachkaskadendüse eingesetzt werden. Ein dazu geeignetes Beschichtungsverfahren ist beispielsweise aus der US 3,508,947 vorbekannt, die insoweit zum Gegenstand der vorliegenden Erfindung gemacht wird. Das mehrschichtige Laminat (aktivierbares Klebeetikett) wird dabei bevorzugt durch ein Verfahren hergestellt, bei dem die mindestens zwei fließfähigen Zusammensetzungen kontinuierlich auf ein bahnförmiges Substrat, vorzugsweise dass Sichtmaterial, beschichtet werden. Dabei erfolgt die Beschichtung unter Verwendung einer Mehrfachkaskadendüse. Die Beschichtungsgeschwindigkeit beträgt vorzugsweise 30 bis 1500 m/min, besonders bevorzugt 150 bis 1200 m/min und ganz besonders bevorzugt 300 bis 1000 m/min.

Die Materialschicht für die Mittelschicht und die Haftschicht werden separat als flüssiger Film in die Beschichtungsvorrichtung eingespeist. Wesentliches Merkmal der Mehrfachkaskadendüse ist, dass aus den einzelnen zu beschichtenden Filmen ein Gesamtfilm gebildet wird. In diesem Gesamtfilm liegen die einzelnen Filme in der räumlichen Anordnung vor, wie sie später in dem mehrschichtigen Laminat (Klebeetikett) gewünscht ist. Der Gesamtfilm wird von der Mehrfachkaskadendüse auf den sich bewegenden bahnförmigen Träger gegeben. Vorzugsweise handelt es sich bei dem Verfahren um ein Slidecoatingverfahren. Beim Slidecoating gleitet der Gesamtfilm über eine Fläche, z.B. Metallfläche (Sliding) und wird danach auf das Substrat abgelegt.

Im Gegensatz dazu wird der Gesamtfilm bei einem Slotcoatingverfahren aus einem Schlitz oder einer Düse direkt, d.h. ohne Sliding, auf das Substrat gegeben.

Besonders bevorzugt handelt es sich weiterhin um ein Vorhangbeschichtungsverfahren (Curtain Coating). Beim Vorhangbeschichtungsverfahren wird ein frei fallender Filmvorhang auf dem Substrat abgelegt. Damit der Filmvorhang frei fallen kann, muss der Abstand zwischen Düse oder sonstiger Austrittsöffnung und dem sich bewegenden Substrat größer als die zu beschichtende Schichtdicke sein. Besonders bevorzugt handelt es sich um ein Slidecoatingverfahren in Kombination mit einem Vorhangbeschichtungsverfahren.

Alternativ kann die Beschichtung aus Mittelschicht und Haftschicht, jedoch auch in mehreren Arbeitsgängen, z.B. also nacheinander, aufgebracht werden. Bevorzugt ist jedoch die Aufbringung in einem Arbeitsgang.

Das mehrschichtige klebende Laminat (aktivierbares Klebeetikett) eignet sich als Etikett oder Etikettenzuschnitt, Klebefolie oder Klebeband.

Der Gesamtaufbau des Klebeetiketts weist dabei bevorzugt eine Dicke von 20 µm bis 350 µm, vorzugsweise von 30 µm bis 170 µm auf.

Besonders bevorzugt ist dabei ein Beispiel-Aufbau aus einem Papiermaterial mit einem Flächengewicht von 80 g/m² als Sichtmaterial, auf welches als Mittelschicht ein Haftkleber V215 der BASF SE, Ludwigshafen, Deutschland, mit einem Auftragsgewicht von 10 gsm (trocken) aufgebracht wurde und einer Haftschicht bestehend aus RW 26 (Planatol Wetzel GmbH, Rohrdorf, Deutschland) mit einem Auftragsgewicht von 10 gsm (trocken).

Zur Verdeutlichung des Unterschieds zwischen einem Aufbau mit oder ohne Mittelschicht wurden Versuche durchgeführt, wobei bei Verwendung eines Aufbaus gemäß dem vorstehend bevorzugten Beispiel bei verschiedenen Anpressdauern die sofortige Haftung sowie die Haftung nach 60 sec. bestimmt wurde. Dies wurde einem Referenzbeispiel gegenübergestellt, bei dem lediglich eine Haftschicht von 20 gsm aus RW 26 (Planatol Wetzel GmbH, Rohrdorf, Deutschland) eingesetzt wurde, so dass die Gesamtdicke auf der Sichtschicht konstant blieb. Als zu beklebendes Substrat wurde ein Verpackungskarton (Wellpappe) eingesetzt. Das Ergebnis ist in der nachfolgenden Tabelle wiedergegeben.

| Klebstoffaufbau (Anzahl Schichten) | Auftragsgewicht | Anpressdauer /s | Haftung sofort | Haftung nach 60s |
|---|---|---|---|---|
| RW26 (1) | 20gsm | 1 | + | +++ / FR |
| RW26 (1) | 20gsm | 0,3 | 0 | -- |
| V215/RW26 (2) | 10/10 gsm | 1 | ++ | FR |
| V215/RW26 (2) | 10/10 gsm | 0,3 | ++ | FR |
| V215/RW26 (2) | 10/10 gsm | 0,15 | + | FR |

| | | | | |
|---|---|---|---|---|
| + Tack oder Haftung vorhanden ++ deutliche(r) Tack/Haftung +++ sehr guter(r) Tack/Haftung FR Faserausriss | | | | |

Hierbei ist gut zu erkennen, dass die Verwendung eines zweischichtigen Klebeetikettenaufbaus die Haftung, sowohl die sofort auftretende Haftung als auch die Haftung nach 60 sec, deutlich verbessert bis hin zum Ausreißen von Fasern aus dem Substrat. Dies kann ferner bereits bei einer deutlich verringerten Anpressdauer erzielt werden, so dass eine sichere Haftung von Etiketten trotz größerer Etikettiergeschwindigkeit erreicht werden kann.

Durch die Vorsehung der Mittelschicht kann die Anfasshaftung um einen Faktor > 4 gegenüber einer identischen Haftschicht verbessert werden. Ist beim zweischichtigen Aufbau, nämlich lediglich einer Haftschicht, ca. 1 Sekunde Anpressdauer beim Etikettieren nötig, sind beim erfindungsgemäßen Aufbau ca. 0,15 Sekunden ausreichend.

Darüber hinaus erhöht die Mittelschicht die Endhaftung durch einen dissipativen Anteil, so dass es kaum zu einem Abplatzen des Etiketts kommt.

Derartige aktivierbare Klebeektiketten finden bevorzugt als Logistiketiketten oder -klebebänder sowie für typische Etiketten oder Klebebandanwendungen zum Schmücken, Kennzeichnen oder Verschließen Anwendung. Insbesondere können sie als Ersatz für vorkonfektionierte Naßleimanwendungen, z.B. bei Flaschen, Dosen, oder anderen Behältern dienen, bei denen die Etiketten zu einem Etikettenstapel vorkonfektioniert sind.

## Patentansprüche

1. Aktivierbares Klebeetikett umfassend ein flexibles bahnförmiges Sichtmaterial, wobei auf einer Seite des flexiblen Sichtmaterials mindestens eine Haftschicht aus einem feuchteaktivierbaren, im trockenen Zustand nicht klebrigen Klebestoffs aufgebracht ist, **dadurch gekennzeichnet, dass** mindestens eine Mittelschicht vorgesehen ist, die haftklebend ausgebildet ist, die zwischen dem Sichtmaterial und der Haftschicht angeordnet ist und wobei die Mittelschicht die Trennung von Sichtmaterial und Haftklebeschicht, im aufgeklebten Zustand oder applizierten Zustand, verhindert und eine Glasübergangstemperatur Tg kleiner als die Anwendungstemperatur aufweist.

2. Aktivierbares Klebeetikett nach Anspruch 1, **dadurch gekennzeichnet, dass** das Sichtmaterial eine Folie oder ein Papier umfasst und insbesondere bedruckbar ausgebildet ist.

3. Aktivierbares Klebeetikett nach Anspruch 1 oder 2,
**dadurch gekennzeichnet, dass** das Sichtmaterial bei Papier eine Dicke von 5 - 250 µm, vorzugsweise 15 - 200 µm, vorzugsweise 40 - 100 µm aufweist und bei einer Folie von 5-250 µm, vorzugsweise 10-200 µm und vorzugsweise 15 - 180 µm.

4. Aktivierbares Klebeetikett nach einem der vorangehenden Ansprüche, **dadurch gekennzeichnet, dass** die Mittelschicht bei Raumtemperatur haftklebende Klebstoffe umfasst, insbesondere bei Raumtemperatur haftklebende Klebstoffe.

5. Aktivierbares Klebeetikett nach einem der vorangehenden Ansprüche, **dadurch gekennzeichnet, dass** die Mittelschicht eine Dicke von 1 - 30 µm, vorzugsweise 2 - 20 µm, vorzugsweise 4 - 12 µm aufweist.

6. Aktivierbares Klebeetikett nach einem der vorangehenden Ansprüche, **dadurch gekennzeichnet, dass** die Haftschicht eine Dicke von 1 - 50 µm, vorzugsweise 3 - 20 µm, vorzugsweise 5 - 15 µm aufweist.

7. Aktivierbares Klebeetikett nach einem der vorangehenden Ansprüche, **dadurch gekennzeichnet, dass** der Klebstoff der Haftschicht mittels Wasser oder Wasserdampf aktivierbar ist.

8. Aktivierbares Klebeetikett nach einem der vorangehenden Ansprüche, **dadurch gekennzeichnet, dass** die der Mittelschicht gegenüberliegende Seite des Sichtmaterials nicht klebstoffabweisend ausgerüstet ist.

9. Aktivierbares Klebeetikett nach einem der vorangehenden Ansprüche, **dadurch gekennzeichnet, dass** das aktivierbare Klebeetikett als Linerless-Klebeetikett konfektionierbar ist, insbesondere rollenförmig oder als Stapel von Etikettausschnitten oder Etikettenzuschnitten.

10. Aktivierbares Klebeetikett nach einem der vorangehenden Ansprüche, **dadurch gekennzeichnet, dass** die Haftschicht eingefärbt ist.

11. Aktivierbares Klebeetikett nach einem der vorangehenden Ansprüche, **dadurch gekennzeichnet, dass** das aktivierbare Klebeetikett durch Beschichtung der Mittelschicht und der Haftschicht auf das Sichtmaterial in einem Verfahrensschritt mit einer Mehrfachkaskadendüse herstellbar ist.

12. Aktivierbares Klebeetikett nach einem der vorangehenden Ansprüche, **dadurch gekennzeichnet, dass** das aktivierbare Klebeetikett durch Beschichtung der Mittelschicht und der Haftschicht in einem Vorhangbeschichtungsverfahren auf das Sichtmaterial aufbringbar ist.

13. Verwendung eines aktivierbaren Klebeetiketts nach einem der Ansprüche 1-12 als Etikettenzuschnitt, Klebeband oder Klebefolie.

## Claims

1. An activatable adhesive label comprising a flexible visible material in web form, wherein at least one adhesive layer made of a moisture-activatable adhesive which is non-sticky in the dry state is applied to one side of the flexible visible material, **characterized in that** at least one middle layer is provided which is designed to be pressure-sensitive and which is arranged between the visible material and the adhesive layer, and wherein the middle layer prevents the separation of the visible material and the pressure-sensitive adhesive layer, in the glued-on state or applied state, and has a glass transition temperature Tg lower than the application temperature.

2. The activatable adhesive label according to claim 1, **characterized in that** the visible material comprises a film or paper and is in particular designed to be printable.

3. The activatable adhesive label according to claim 1 or claim 2, **characterized in that** the visible material has a thickness of 5 - 250 µm, preferably 15 - 200 µm, preferably 40 - 100 µm for paper and 5 - 250 µm, preferably 10 - 200 µm and preferably 15 - 180 µm for film.

4. The activatable adhesive label according to any of the preceding claims, **characterized in that** the middle layer comprises adhesives that are pressure-sensitive at room temperature, in particular adhesives that are pressure-sensitive at room temperature.

5. The activatable adhesive label according to any of the preceding claims, **characterized in that** the middle layer has a thickness of 1 - 30 µm, preferably 2 - 20 µm, preferably 4 - 12 µm.

6. The activatable adhesive label according to any of the preceding claims, **characterized in that** the adhesive layer has a thickness of 1 - 50 µm, preferably 3 - 20 µm, preferably 5 - 15 µm.

7. The activatable adhesive label according to any of the preceding claims, **characterized in that** the adhesive of the adhesive layer is activatable by means of water or steam.

8. The activatable adhesive label according to any of the preceding claims, **characterized in that** the side of the visible material opposite the middle layer is not equipped to be adhesive-repellent.

9. The activatable adhesive label according to any of the preceding claims, **characterized in that** the activatable adhesive label can be manufactured as a linerless adhesive label, in particular in roll form or as a stack of label cutouts or label blanks.

10. The activatable adhesive label according to any of the preceding claims, **characterized in that** the adhesive layer is colored.

11. The activatable adhesive label according to any of the preceding claims, **characterized in that** the activatable adhesive label can be produced by coating the middle layer and the adhesive layer onto the visible material in one method step using a multiple cascade nozzle.

12. The activatable adhesive label according to any of the preceding claims, **characterized in that** the activatable adhesive label can be applied to the visible material by coating the middle layer and the adhesive layer in a curtain coating process.

13. A use of an activatable adhesive label according to any of claims 1-12 as a label blank, adhesive tape or adhesive film.

## Revendications

1. Etiquette adhésive activable comprenant un matériau visible flexible en forme de bande, dans laquelle au moins une couche adhésive constituée d'un adhésif activable par l'humidité et non collant à l'état sec est appliquée sur une face du matériau visible flexible, **caractérisée par le fait qu'**il est prévu au moins une couche centrale qui est réalisée de manière à être sensible à la pression et qui est disposée entre le matériau visible et la couche adhésive, et dans laquelle la couche centrale empêche la séparation du matériau visible et de la couche adhésive sensible à la pression, à l'état collé ou à l'état appliqué, et présente une température de transition vitreuse Tg inférieure à la température d'application.

2. Etiquette adhésive activable selon la revendication 1, **caractérisée par le fait que** le matériau visible comprend un film ou un papier et est réalisé en particulier de manière à être imprimable.

3. Etiquette adhésive activable selon la revendication 1 ou 2, **caractérisée par le fait que**, dans le cas de papier, le matériau visible présente une épaisseur comprise entre 5 et 250 µm, de préférence entre 15 et 200 µm, de préférence entre 40 et 100 µm et, dans le cas d'un film, entre 5 et 250 µm, de préférence entre 10 et 200 µm et de préférence entre 15 et 180 µm.

4. Etiquette adhésive activable selon l'une quelconque des revendications précédentes, **caractérisée par le fait que** la couche centrale comprend des adhésifs sensibles à la pression à température ambiante, en particulier des adhésifs sensibles à la pression à température ambiante.

5. Etiquette adhésive activable selon l'une quelconque des revendications précédentes, **caractérisée par le fait que** la couche centrale présente une épaisseur comprise entre 1 et 30 µm, de préférence entre 2 et 20 µm, de préférence entre 4 et 12 µm.

6. Etiquette adhésive activable selon l'une quelconque des revendications précédentes, **caractérisée par le fait que** la couche adhésive présente une épaisseur comprise entre 1 et 50 µm, de préférence entre 3 et 20 µm, de préférence entre 5 et 15 µm.

7. Etiquette adhésive activable selon l'une quelconque des revendications précédentes, **caractérisée par le fait que** l'adhésif de la couche adhésive peut être activé au moyen d'eau ou de vapeur d'eau.

8. Etiquette adhésive activable selon l'une quelconque des revendications précédentes, **caractérisée par le fait que** la face du matériau visible, qui est opposée à la couche centrale n'est pas équipée d'une finition anti-adhésif.

9. Etiquette adhésive activable selon l'une quelconque des revendications précédentes, **caractérisée par le fait que** l'étiquette adhésive activable peut être confectionnée sous forme d'étiquette adhésive linerless, en particulier sous forme de rouleau ou en tant que pile de découpes d'étiquettes ou d'ébauches d'étiquettes.

10. Etiquette adhésive activable selon l'une quelconque des revendications précédentes, **caractérisée par le fait que** la couche adhésive est colorée.

11. Etiquette adhésive activable selon l'une quelconque des revendications précédentes, **caractérisée par le fait que** l'étiquette adhésive activable peut être fabriquée en enduisant la couche centrale et la couche adhésive sur le matériau visible en une seule étape de procédé avec une buse à cascade multiple.

12. Etiquette adhésive activable selon l'une quelconque des revendications précédentes, **caractérisée par le fait que** l'étiquette adhésive activable peut être appliquée sur le matériau visible en enduisant la couche centrale et la couche adhésive dans un procédé d'enduction par rideau.

13. Utilisation d'une étiquette adhésive activable selon l'une quelconque des revendications 1 à 12, en tant qu'ébauche d'étiquette, ruban adhésif ou film adhésif.
